# EUROPEAN PATENT SPECIFICATION

(11) **EP 0 181 328 B1**
(45) Date of publication and mention of the grant of the patent: **17.03.1993**
(21) Application number: 84901985.6
(22) Date of filing: 23.05.1984
(51) Int. Cl.: A01G 9/02

(54) **FLOWERPOT**
BLUMENTOPF
POT A FLEURS

(43) Date of publication of application: 21.05.1986
(73) Proprietor: OS PLASTIC A/S, 3520 Farum (DK)
(72) Inventor: HOUGARD, Erling, DK-4040 Jyllinge (DK)
(74) Representative: Liska, Horst, Dr.-Ing.
(86) International application number: DK8400043
(87) International publication number: WO8505247

(56) References cited:
- CH-C- 277 547
- GB-A- 300
- GB-A- 103 027
- GB-A- 1 069 101
- SE-C- 128 773
- US-A- 1 775 831
- US-A- 3 800 469
- US-A- 4 173 097

## Description

The present invention relates to a flowerpot of the type recited in the preambles of the claims.

For automatisation of watering flowerpot cultures in large-scale market gardens is known the so-called bottom watering, and watering according to the flood/ebb principle while using the so-called "raise-lower" tables.

By bottom watering, the flowerpots stand with their perforated bottoms on a water-conducting mat, which is kept moist to let the moisture rise into the pot.

This method may have the disadvantage that the pot bottom and the mat surface come in close contact so as to cause problems of ventilation at the lowermost part of the pot, leaving the pot filling to become acid or the plant roots to rot.

Where "raise/lower" tables are used, the flowerpots are placed in flat-bottomed tanks which are periodically filled and subsequently drained of water, which is known as the flood/ebb principle. In comparison with the bottom watering method, the flood/eb principle provides improved control of measuring and improved arbitrary control of the watering process dependent on the specific conditions prevailing.

But though this method implies that water is removed from he tank fairly quickly, it is not the same as the lowermost part of the pot filling, in particular, being relieved of excess water sufficiently quickly. The removal of excess water is, however, a prerequisite to good ventilation, particularly of the lowermost area of the pot filling. On the other hand, the flood/ebb principle offers the possibility of good access of air to the lowermost part of the pot as water is quickly removed from the area around the pot as described above.

An improvement in ventilation conditions has already been suggested as mentioned above by designing sideways-turning openings at the lowermost part of the shell of the flowerpots in the immediate viscinity of the bottom of the pot, said openings serving the purposes of letting in water and draining off any excess water from the pot filling besides admitting ventilating air to the lowermost part of the pot. Experience has shown, however, that the removal of excess water and the desired improvements in ventilating conditions must often still be characterized as dissatisfactory.

According to the price-list "Testadur" of April 1982, a flowerpot of this type is known which has supporting feet along the circumference thereof provided with openings, said feet in combination defining a small surface "bottom". Between the supporting feet, this "bottom" is upwardly stepped and provided with openings. This flowerpot is not suited for watering according to the mat principle since its feet exert too much pressure onto a mat thereby closing the pores of the mat.

DE-B-1,582,683 discloses a flowerpot comprising a shell and a bottom which is defined by an annular upper region and centric lower region enclosed by this upper region and adapted to be placed on a resting surface. The centric lower region is connected to the upper annular region by a conical upwardly broadening wall region. There are openings in the annular upper region and in the centric lower region. The shell is extended beyond the upper annular region downwardly to the level of the underside of the centric region to be placed on the resting surface and is provided all around with downwardly open slits. The centric region has a very small diameter so that it is not suited for watering according to the mat principle, and it is not provided for this purpose since its bottom would exert too much pressure onto the mat thereby closing the pores of the mat.

Fig. 26 of DE-A-1,932,110 shows a flowerpot having a bottom which has an annular region provided with openings and placeable on a resting surface and a centric upwardly stepped region which is provided with openings. This flowerpot is unsuited for watering according to the mat principle since its bottom would exert too much pressure onto a mat thereby closing its pores, but it cannot be watered either according to the flood-/ebb principle because there is no access to the space below the upwardly stepped centric region of the bottom.

US-A-4 173 097 discloses a flower pot which has no plane bottom. Bottom sections around openings do resemble feet. These sections rise from the feet radially inwardly towards a central bottom area. If such a flowerpot is put on a mat, it will strongly compress the mat around the openings because the sections around the openings are the only supporting faces of the pot and thus the pressure on the sections around the openings is relatively high. This has the consequence that - if at all - only a very small quantity of water from the mat can penetrate through the openings. Sections between the bottom sections according to US-A-4 173 097 can hardly be designated as channels. They have no plane upper walls. They rise first upwardly from outwards inwardly and terminate in the slightly elevated central bottom area by inner parts of them, sloping down from outwards inwardly. Openings in the inner sloping down parts face the central bottom area.

Finally in the shell of this flowerpot there are slots through which soil and roots can penetrate.

GB-A-1,069,101 discloses a flowerpot which has feet at its corners on which the pot rests. There are no openings provided in said feet. However, even if openings were provided in said feet, the resting surfaces of said feet - since they are small - would compress a mat around the openings to the effect that almost no water could penetrate through said openings into said feet and then into the pot. Openings in a raised central bottom between the feet are not provided in the upper wall of this central bottom so that when the pot is watered according to the flood/ebb principle, soil above said upper wall will not be aerated when the water during "ebb" is drained. Thus the pot according to GB-A-1,069,101 is neither suited for watering according to the principle of capillary absorption through a watering mat nor according to the flood/ebb principle.

US-A-1,775,831 discloses a flowerpot having a bottom rising conically into its interior. In the transition area between the lower edge of its shell and the lower edge of the bottom there are sector-shaped feet between which openings are provided for establishing a connection between the resting surface of the pot and the interior of the pot. In the conical wall of the bottom, openings are provided which estabilish a connection between the conical space below the bottom and the interior of the pot. Moreover the peak of the conically shaped bottom is open. This pot is not suited for watering according to the flood/ebb principle because for this purpose the water would have to rise so high during flooding that the stability of the pot would no more be ensured. Besides watering would not be uniform due to the different heights of the openings in the conical wall of the bottom and of the opening in the peak of the conical bottom.

It is the object of the present invention to provide a flowerpot which can be particularly well watered and aerated and is designed so that it can be watered selectively according to the mat principle or the flood/ebb principle. The invention is directed to a flower pot for the selective use according to both principles.

The accomplishment of this object is depicted in claims 1 to 4.

The invention is explained in the following with reference to the attached drawings.
- Fig. 1: shows a first embodiment, viewed from below.
- Fig. 2: shows a section according to the line II-II in Fig. 1.
- Fig. 3: shows a section according to the line III-III in Fig. 2.
- Fig. 4: shows a second embodiment, viewed from below.
- Fig. 5: shows a section according to the line V-V in Fig. 4.
- Fig. 6: shows a third embodiment, viewed from below.
- Fig. 7: shows a section according to the line VII-VII in Fig. 6.
- Fig. 8: shows a view according to line VIII-VIII in Fig. 7.
- Fig. 9: shows a fourth embodiment from below.
- Fig. 10: shows a section according to the line X-X in Fig. 9, and
- Fig. 11: shows a section according to the line XI-XI in Fig. 10.

All embodiments of the flowerpot each comprise a shell 10 having a rim shoulder 12 at the top, and a bottom 14 at the lower part. For supporting the flowerpots on a resting surface, supporting feet 16, 16a, 16b, 16b', 16c, 16c' are provided.

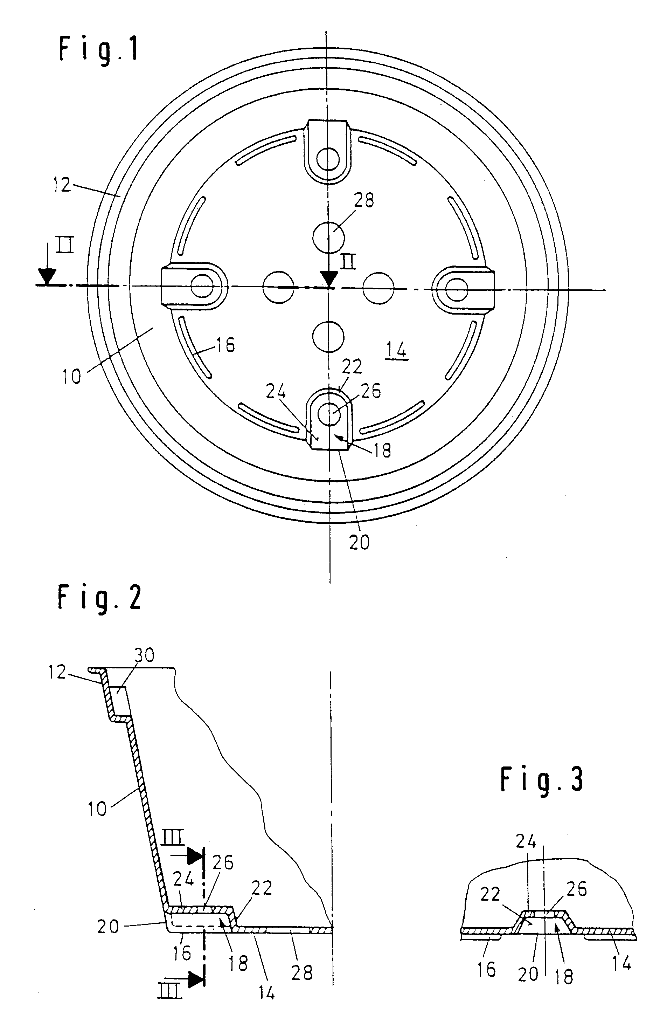

In the embodiment shown in Figs. 1 to 3, a shell 10 with a rim shoulder 12 extends from a bottom 14. On the underside of the bottom 14 are provided supporting feet 16.

The bottom 14 defines a number of radially extending, downwardly open channels 18 with access openings 20 in the shell 10 terminating in the interior at end walls 22. The channels have trapezoidal cross-sections. In their upper walls 24 are provided openings 26 for allowing water and air to pass through.

In the present embodiment, access openings 26 are circular and each access opening 26 is provided in the upper wall 24 of each channel 18. However, the openings 26 may also have a different shape, e.g. they can be oblong. Also a plurality of openings 26 may be provided in the upper wall 24 of each channel 18.

The bottom 14 is designed with other passage openings 28 which do not directly communicate with the first-mentioned openings 26 by the walls of the channels. This means that the flowerpot is immediately useful for watering according to the mat principle when placed with the supporting feet 16 at its bottom 14 on a watering mat. Water will then flow through the access openings 28 to the pot filling without the mat being compressed too much around the openings 28. After watering, the openings will act as ventilating holes.

If the flowerpot is used for watering according to the Flood/ebb principle, the access openings 26 will, in the flood state, act for the supply of water to the pot filling, and, in the ebb state, act for removal of water from the pot filling with subsequent ventilation of the lowermost part of the pot. This effect may to some extent be supplemented by the passage openings 28 in the bottom 14.

The supporting feet 16 are designed as ribs shaped as segments of a circle between which the channels 18 with their access openings 20 extend.

The inside of the rim shoulder 12 is provided with projections 30 which prevent the flowerpots from being put too tightly together when stacked.

Since the channels 18 are defined by end walls 22 extending from the bottom 14, water supplied according to the flood/ebb principle need not flow under the centre of the bottom 14 but flows from marginal areas of the bottom 14 through the passage openings 26 into the interior of the pot thereby favouring the watering and the ventilation of the top filling in the proximity of the shell 10.

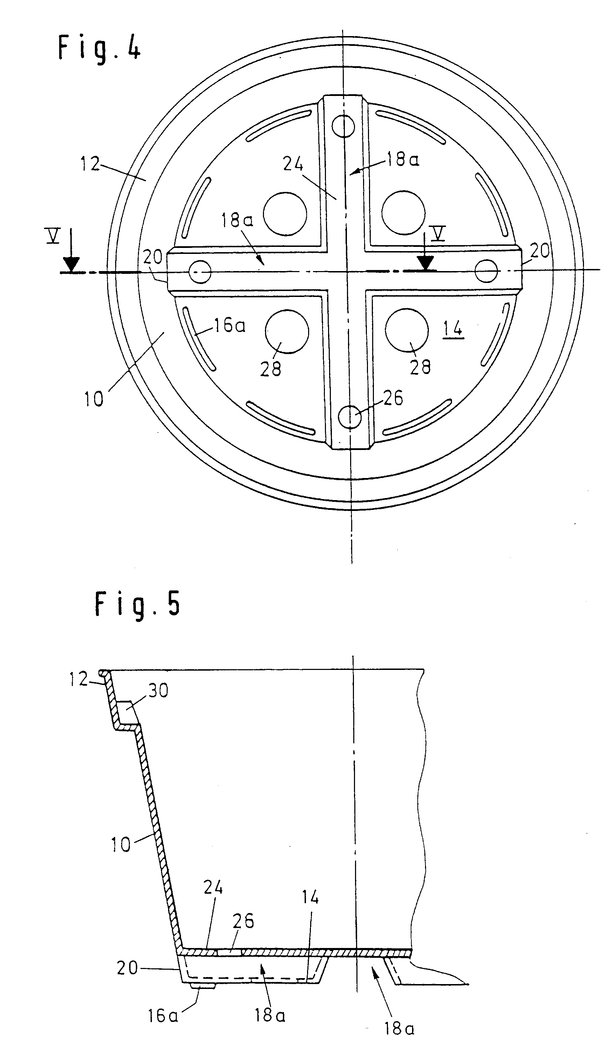

In the embodiment shown in Figs. 4 and 5, the bottom 14 is designed with a number of downwardly open channels 18a extending from access openings 20 at the lower edge of the shell 10 transversely below the flowerpot. The channels 18a have a trapezoidal cross-section. Their upper walls 24 facing the top filling and spacedly arranged above the bottom 14 are provided with passage openings 26.

The bottom 14 is provided with other passage openings 28 isolated by the walls of the channels 18a against direct communication with the access openings 26. That means that the flowerpot is useful directly for watering according to the mat principle when it is placed with its bottom 14 on a watering mat. Water will then be supplied to the pot filling through the passage openings 28. Moreover the passage openings 28 serve as ventilation holes.

From the bottom 14 extend supporting feet 16a downwardly near the edge of the bottom 14 between the channels 18a as ribs shaped as segments of a circle. The access openings 20 of the channels 18a are arranged between opposite ends of each two adjacent ribs.

If the flowerpot is watered according to the flood/ebb principle, water will be supplied, in the flood state, through the passage openings 26, and, in the ebb state, will be removed from the pot filling with subsequent ventilation of the lowermost part of the pot filling. The passage openings 28 in the bottom 14 may supplement this effect to some extent.

If the flowerpot is watered according to the mat principle, the supporting feet 16a will compress the mat to some extent, but the bottom 14 exerts only low pressure onto the mat so that the flow of water from the mat into the pot filling is not hindered.

The inside of the rim shoulder 12 is provided with protrusions 30 which prevent a number of pots from being put too tightly together when stacked since the rim shoulder 12 of a superjacent flowerpot will rest on the projections 30 of a subjacent pot.

The channels 18a extend diametrically continuously under the bottom 14. Each channel 18a has each an access opening 20 at each end thereof.

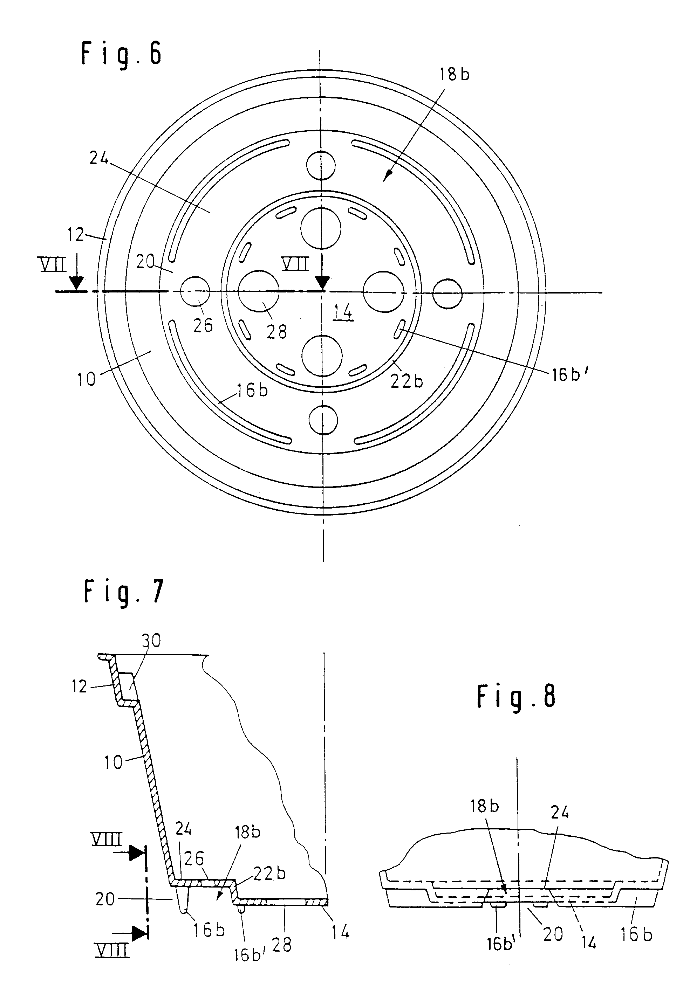

The embodiment shown in Figs. 6 to 8 is distinguished from that shown in Figs. 4 and 5 in that instead of the diametrical channels 18a it has a ring channel 18b defined on the inner side by a ring wall 22b limiting the channel relative to the bottom 14 with passage openings 28, and which on the outer side is defined by curved ribs shaped as segments of an angle defining supporting feet 16b. Opposite ends of each two adjacent ribs form the side limitations of access openings 20 to the ring channel 18b. The ring channel 18b has a trapezoidal cross-section and access openings 26 in its upper wall 24. On the underside of the bottom 14 are provided other supporting feet 16b' near the edge of the bottom 14. This embodiment can be used just as the afore-described embodiment.

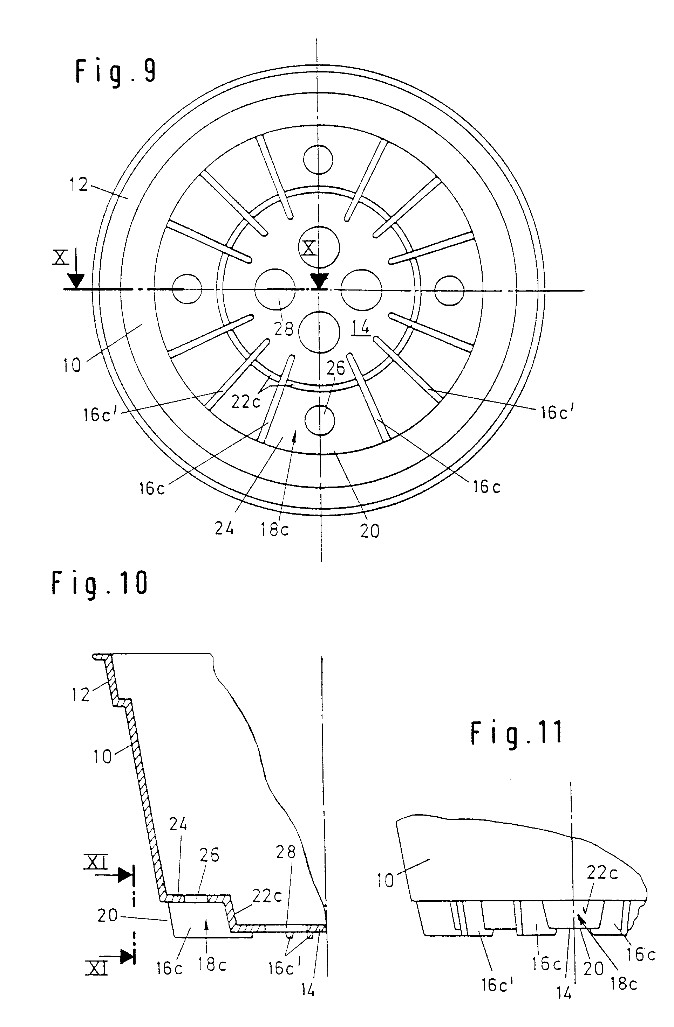

The embodiment according to Figs. 9 to 11 is distinguished from the afore-described embodiments in that the supporting feet 16c are defined by radial ribs arranged along the circumference of the flowerpot, each two of said supporting feet 16c laterally limiting a channel 18c. Furthermore additional supporting feet 16c' are defined by radial ribs and are arranged between the supporting feet 16c. At least some of the upper walls of the channels 18c are provided with passage openings 26.

All channels 18c end in the interior at a ring wall 22c.

The rim shoulder 12 is not provided with protrusions 30 according to Figs. 5 and 7 since the supporting feet 16c form spacers between two flowerpots nested into each other since a superjacent flowerpot rests with its supporting feet 16c on the upper wall of the channel 18c of a subjacent flowerpot. This embodiment can be used just as the above-described embodiments.

In all embodiments, the passage openings 26, 28 are concealed from a spectator so as to let the pots preserve an attractive appearance. In particular, no openings are provided in the shells 10 of the flowerpots through which a pot filling or roots may protrude. Laterally protruding roots moreover make it difficult to remove plants from the flowerpots. Besides openings in the shells 10 of flowerpots are difficult to make.

## Claims

1. A flowerpot comprising a shell (10), a plane bottom (14) in which are provided first openings (28), transversely extending channels (18) having access openings (20) in said shell (10) which are the only openings (20) in said shell (10), each channel (18) being open downwardly and having only one plane upper wall (24) upwardly displaced from the bottom, (14) said upper walls (24) are each provided with second openings (26), said channels (18) terminate at end walls (22) connecting their upper wall (24) to said bottom (14), and supporting feet (16) are provided at the lower side of said bottom (14) along the edge of said bottom (14) (Fig. 1 to 3) said supporting feet (16) being such that the flowerpot can be used for selective watering according to the mat-principle or the flood/ebb-principle.

2. A flowerpot comprising a shell (10), a plane bottom (14) in which are provided first openings (28), transversely extending channels (18a) having access openings (20) in said shell (10), which are the only openings (20) in said shell (10), each channel (18a) being open downwardly and having only one plane upper wall (24) upwardly displaced from the bottom (14), said upper walls (24) are each provided with second openings (26), said channels (18a) are through-going and intersect each other and supporting feet (16a) are provided at the lower side of said bottom (14) along the edge of said bottom (14) (Fig. 4 and 5), said supporting feet (16a) being such that the flower pot can be used for selective watering according to the mat-principle or the flood/ebb-principle.

3. A flowerpot comprising a shell (10), a plane bottom (14) in which are provided first openings (28), a channel (18b) being open downwardly and having only one plane upper wall (24) upwardly displaced from the bottom (14) in which are provided second openings (26), said channel (18b) being annular and limited outwardly by annular wall sections forming supporting feet (16b) extending from said upper wall (24) of said channel (18b) and leaving free access openings (20) between them, and limited inwardly by an annular wall (22b) connecting said bottom (14) with said upper wall (24) of said channel (18b), and additional supporting feet (16b') are provided at the lower side of said bottom (14) along the edge of said bottom (14) (Fig. 6 to 8), said supporting feet (16b and 16b') being such that the flower pot can be used for selective watering according to the mat-principle or the flood/ebb-principle.

4. A flowerpot comprising a shell (10), a central plane bottom (14) in which are provided first openings (28), channels (18c), being open downwardly and having only one plane upper wall (24) upwardly displaced from the bottom (14) in which are provided second openings (26), said upper wall (24) being a ring wall, said channels (18c) terminating at an annular end wall (22c) connecting the upper wall (24) of each channel (18c) to said central bottom (14), and side walls (16c) of the channels (18c) and additional walls (16c') between said side walls (16c) extending inwardly and forming feet (16c, 16c') are provided at the lower side of said ring wall and said central bottom (14) distributed along the edge of said bottom (14), said supporting feet (16c and 16c') being such that the flower pot can be used for selective watering according to the mat-principle or the flood/ebb-principle (Fig. 9 to 11).

## Patentansprüche

1. Blumentopf mit einer Schale (10), einem erste Öffnungen (28) enthaltenen ebenen Boden (14), quer verlaufenden Zugangsöffnungen (20) aufweisenden Kanälen (18) in der Schale (10), wobei die Zugangsöffnungen (20) die einzigen Öffnungen in der Schale (10) sind und die Kanäle (18) nach unten offen sind und jeweils lediglich eine nach oben gegen den Boden (14) versetzte obere Wand (24) aufweisen, die mit zweiten Öffnungen (26) versehen sind, die Kanäle (18) in ihre obere Wand (24) mit dem Boden (14) verbindenden Endwänden (22) enden und an der Unterseite des Bodens (14) längs dessen Rand derart ausgebildete Stützfüße (16) (Fig. 1 bis 3) vorgesehen sind, daß der Blumentopf (16) zur selektiven Bewässerung nach dem Vlies- oder Zulauf/Ablauf-Prinzip verwendbar ist.

2. Blumentopf mit einer Schale (10), einem erste öffnungen (28) enthaltenden ebenen Boden (14), quer verlaufenden Zugangsöffnungen (20) aufweisenden Kanälen (18a) in der Schale (10), wobei die Zugangsöffnungen (20) die einzigen Öffnungen in der Schale (10) sind und die Kanäle (18a) nach unten offen sind und lediglich eine nach oben gegen den Boden (10) versetzte obere Wand (24) aufweisen, die mit zweiten Öffnungen (26) versehen sind, die Kanäle (18a) durchgehend sind und sich schneiden und an der Unterseite des Bodens (14) längs dessen Rand derart ausgebildete Stützfüße (16a) (Fig. 4 und 5) vorgesehen sind, daß der Blumentopf zur selektiven Bewässerung nach dem Vlies- oder Zulauf/Ablauf-Prinzip verwendbar ist.

3. Blumentopf mit einer Schale (10), einem erste Öffnungen (28) aufweisenden ebenen Boden (14), einem zweite Öffnungen (26) aufweisenden Kanal (18b), der nach unten offen ist und lediglich eine nach oben gegen den Boden (14) versetzte obere Wand (24) besitzt, wobei der Kanal (18b) ringförmig ist und nach außen durch ringförmige Wandabschnitte, welche von der oberen Wand (24) des Kanals (18b) ausgehende Stützfüße (16b) bilden und freie Zugangsöffnungen (20) zwischen sich belassen, und nach innen durch eine den Boden (14) mit der oberen Wand (24) des Kanals (18b) verbindende ringförmige Wand (22b) begrenzt ist, an der Unterseite des Bodens (14) längs dessen Rand weitere Stützfüße (16b') (Fig. 6 bis 8) vorgesehen sind, und wobei die Stützfüße (16b und 16b') so ausgebildet sind, daß der Blumentopf zur selektiven Bewässerung nach den Vlies- oder Zulauf/Ablauf-Prinzip verwendbar ist.

4. Blumentopf mit einer Schale (10), einem erste Öffnungen (28) aufweisenden zentralen ebenen Boden (14), Zugangsöffnungen (20) aufweisenden Kanälen (18c), die nach unten offen sind und lediglich eine nach oben gegen den Boden (14) versetzte ebene obere Wand (24) aufweisen, wobei die obere Wand (24) eine Ringwand ist, die Kanäle (18c) in einer die obere Wand (24) der Kanäle (18c) mit dem zentralen Boden (14) verbindenden ringförmigen Endwand (22c) enden und an der Unterseite der Ringwand und des zentralen Bodens (14) längs dessen Rand verteilte Seitenwände (16c) der Kanäle (18c) und weitere Wände (16c') zwischen den Seitenwänden (16c) vorgesehen sind, welche sich nach innen erstrecken und Füße (16c, 16c') bilden, die so ausgebildet sind, daß der Blumentopf zur selektiven Bewässerung nach den Vlies- oder Zulauf/Ablauf-Prinzip verwendbar ist (Fig. 9 bis 11).

## Revendications

1. Pot à fleurs comportant un récipient (10), un fond plan (14) dans lequel sont pratiquées des premières ouvertures (28), des canaux (18) s'étendant transversalement présentant des ouvertures d'accès (20) dans ledit récipient (10) qui sont les seules ouvertures (20) dans ledit récipient (10), chaque canal (18) étant ouvert vers le bas et possédant seulement une paroi supérieure plane (24) décalée verticalement par rapport au fond (14), lesdites parois supérieures (24) sont chacune munie de secondes ouvertures (26), lesdits canaux (18) se terminent en des parois terminales (22) reliant leur paroi supérieure (24) audit fond (14), et des pieds supports (16) sont prévus sur le côté inférieur dudit fond (14) le long du bord dudit fond (14) (Figures 1 à 3), lesdits pieds supports (16) étant tels que le pot à fleurs peut être utilisé pour une irrigation sélective, soit par capillarité, soit par immersion.

2. Pot à fleurs comportant un récipient (10), un fond plan (14) dans lequel sont prévues des premières ouvertures (28), des canaux (18a), s'étendant transversalement, possédant des ouvertures d'accès (20) dans ledit récipient (10), qui sont les seules ouvertures (20) dans ledit récipient (10), chaque canal (18a) étant ouvert vers le bas et possédant seulement une paroi supérieure plane (24) déplacée verticalement par rapport au fond (14), lesdites parois supérieures (24) sont chacune munies de secondes ouvertures (26), lesdits canaux (18a) sont traversants et s'entrecoupent et des pieds supports (16a) sont prévus sur le côté inférieur dudit fond (14) le long du bord dudit fond (14) (Figures 4 et 5), lesdits pieds supports (16a) étant tels que le pot à fleurs peut être utilisé pour une irrigation sélective, soit par capillarité, soit par immersion.

3. Pot à fleurs comportant un récipient (10), un fond plan (14) dans lequel sont prévues des premières ouvertures (28), un canal (18b) étant ouvert vers le bas et possédant seulement une paroi supérieure plane (24) décalée verticalement par rapport au fond (14) dans laquelle sont prévues des secondes ouvertures (26), ledit canal (18b) étant annulaire et limité extérieurement par des sections de paroi annulaires formant des pieds supports (16b) s'étendant depuis ladite paroi supérieure (24) dudit canal (18b) et laissant des ouvertures d'accès libres (20) entre eux, et limité intérieurement par une paroi annulaire (22b) reliant ledit fond (14) à ladite paroi supérieure (24) dudit canal (18b), et des pieds supports supplémentaires (16b') sont prévus sur le côté inférieur dudit fond (14) le long du bord dudit fond (14) (Figures 6 à 8), lesdits pieds supports (16b et 16b') étant tels que le pot à fleurs peut être utilisé pour une irrigation sélective, soit par capillarité, soit par immersion.

4. Pot à fleurs comprenant un récipient (10), un fond plan central (14) dans lequel sont prévues des premières ouvertures (28), des canaux (18c) étant ouverts vers le bas et possédant seulement une paroi supérieure plane (24) déplacée verticalement par rapport au fond (14) dans laquelle sont prévues des secondes ouvertures (26), ladite paroi supérieure (24) étant une paroi annulaire, lesdits canaux (18c) se terminant en une paroi terminale annulaire (22c) réunissant la paroi supérieure (24) de chaque canal (18c) audit fond central (14), et des parois latérales (16c) des canaux (18c) et des parois supplémentaires (16c') entre lesdites parois latérales (16c) s'étendant vers l'intérieur et formant des pieds (16c, 16c') sont prévues sur le côté inférieur de ladite paroi annulaire et ledit fond central (14) répartis le long du bord dudit fond (14), lesdits pieds supports (16c et 16c') étant tels que le pot à fleurs peut être utilisé pour une irrigation sélective, soit par capillarité, soit par immersion (Figures 9 à 11).
